# EUROPÄISCHE PATENTSCHRIFT

(11) **EP 3 116 635 B1**
(45) Veröffentlichungstag und Bekanntmachung des Hinweises auf die Patenterteilung: **29.04.2020**
(21) Anmeldenummer: 15707622.5
(22) Anmeldetag: 02.03.2015
(51) Int. Cl.: B01F 15/00, B01F 7/00, B01F 7/16, F16C 17/24

(54) **RÜHRVORRICHTUNG FÜR ABWASSER**
STIRRING DEVICE FOR WASTEWATER
DISPOSITIF D'AGITATION D'EAUX USÉES

(30) Priorität: 14.03.2014 DE 102014204824
(43) Veröffentlichungstag der Anmeldung: 18.01.2017
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Dr. Gassner & Partner mbB
(86) Internationale Anmeldenummer: PCT/EP2015/054299
(87) Internationale Veröffentlichungsnummer: WO 2015/135783

(56) Entgegenhaltungen:
- WO-A1-2011/083063
- WO-A1-2014/010027
- DE-A1-102005 049 373
- GB-A- 2 192 949
- JP-A- H07 332 355
- JP-U- S5 092 462
- SU-A1- 727 886
- US-A- 5 618 107
- US-A- 5 701 119
- US-A1- 2009 223 083

## Beschreibung

Die Erfindung betrifft eine Rührvorrichtung für Abwasser nach dem Oberbegriff des Anspruchs 1.

Eine solche Rührvorrichtung ist aus der WO 2011/083063 A1 bekannt. Bei der bekannten Rührvorrichtung ist eine Antriebseinrichtung an einer ein Abwasserbecken überspannenden Brücke befestigt. Von der Antriebseinrichtung erstreckt sich in vertikaler Richtung eine Antriebswelle, an der ein Rührwerkzeug befestigt ist. Ein freies Ende der Antriebswelle ist in einem am Boden des Abwasserbeckens befestigten Fanglager drehbar gehalten. - Im Abwasser sind Schlamm und Sand enthalten. Infolgedessen verschleißt das freie Ende der Rührwelle. Ein Spiel zwischen dem freien Ende der Rührwelle und einer Lagerbuchse des Fanglagers kann so groß werden, dass das freie Ende bricht. Infolgedessen kann es durch unkontrollierte Bewegungen des Rührkörpers zu einer Zerstörung des Rührkörpers und/oder einem Bruch der Antriebswelle kommen.

Die WO 2014/010027 A1 offenbart eine Lageranordnung mit einer Schmiermittelpumpe. Mit der Schmiermittelpumpe wird über eine Leitung Schmiermittel zum Lager gepumpt. Das Schmiermittel wird am oberen Ende des Lagers durch eine Verschleißerfassungsleitung in einen Bereich oberhalb eines Flüssigkeitsspiegels transportiert. Die Verschleißerfassungsleitung ist transparent ausgebildet. Es kann erkannt werden, ob im zurücktransportierten Schmiermittel Sand, Wasser oder dgl. enthalten ist.

Aufgabe der Erfindung ist es, die Nachteile nach dem Stand der Technik zu beseitigen. Es soll insbesondere eine Rührvorrichtung für Abwasser abgegeben werden, bei der das Risiko eines Totalschadens vermindert wird.

Diese Aufgabe wird durch die Merkmale des Anspruchs 1 gelöst. Zweckmäßige Ausgestaltungen der Erfindung ergeben sich aus den Merkmalen der Ansprüche 2 bis 11.

Nach Maßgabe der Erfindung wird vorgeschlagen, dass am freien Ende der Antriebswelle eine Gleithülse angebracht ist, und dass eine Einrichtung zur Erfassung eines Verschleißzustands der Gleithülse vorgesehen ist. Der Verschleißzustand des freien Endes der Antriebswelle ist bei Rührvorrichtungen nach dem Stand der Technik nur dann erkennbar, wenn das freie Ende der Rührwelle aus dem Fanglager herausgezogen wird, so dass eine Sichtprüfung möglich ist. Das ist zeit- und kostenaufwändig. Erfindungsgemäß ist am freien Ende der Antriebswelle eine Gleithülse vorgesehen. Die Gleithülse umgibt das freie Ende der Antriebswelle und ist damit drehfest verbunden. Ferner ist eine Einrichtung zur Erfassung des Verschleißzustands der Gleithülse vorgesehen. Sofern mit der Einrichtung zur Erfassung des Verschleißzustands ein bestimmter vorgegebener Verschleißzustand erfasst wird, kann das während des Betriebs außerhalb des Abwasserbeckens erkannt werden. Es ist dann möglich, die Gleithülse rechtzeitig zu wechseln, so dass ein übermäßiger Verschleiß des freien Endes der Antriebswelle sicher und zuverlässig vermieden werden kann. Es kann nicht mehr zu einem Totalschaden durch einen Bruch der Antriebswelle kommen.

Nach weiterer Maßgabe der Erfindung umfasst die Einrichtung zur Erfassung des Verschleißzustands einen am Fanglager angebrachten Sensor, nämlich einen Magnetfeldsensor oder eine Induktionsspule, und eine Auswerteeinrichtung zur Auswertung der vom Sensor gelieferten Signale. Die Auswerteeinrichtung befindet sich zweckmäßigerweise außerhalb des Abwasserbeckens. Sie ist über ein Kabel mit dem Sensor verbunden. Sie ist vorteilhafterweise mit einer Steuerung zum Steuern der Antriebseinrichtung kombiniert. Eine derartige Steuerung kann einen Not-Ausschalter zum manuellen Ausschalten der Antriebseinrichtung umfassen.

Die Auswerteeinrichtung umfasst zweckmäßigerweise eine Schaltung, welche bei Erfassung eines vorgegebenen Verschleißzustands automatisch die Antriebseinrichtung abschaltet. Damit kann sicher und zuverlässig ein erheblicher Schaden oder ein Totalschaden vermieden werden. Die Schaltung kann so ausgestaltet sein, dass eine Wiederinbetriebnahme der Rührvorrichtung erst nach Betätigen eines beim automatischen Abschalten sich automatisch öffnenden Schalters möglich ist.

Nach einer weiteren vorteilhaften Ausgestaltung umfasst die Einrichtung zur Erfassung des Verschleißzustands eine Anzeigeeinrichtung zum Anzeigen eines von der Auswerteeinrichtung ermittelten Betriebszustands. Bei dem Betriebszustand kann es sich um den Verschleißzustand der Gleithülse und/oder einen Not-Abschalt-Zustand handeln. Die Anzeigeeinrichtung kann optische und/oder akustische Signalmittel umfassen. Unter einem "Not-Abschalt-Zustand" wird ein Zustand verstanden, welcher sich infolge eines automatischen Abschaltens der Antriebseinrichtung bei Erfassung des vorgegebenen Verschleißzustands ergibt. Der Betriebszustand kann selbstverständlich auch mittels eines Computers in einer zentralen Überwachungseinrichtung angezeigt werden.

Das Fanglager kann eine die Gleithülse umgreifende Lagerbuchse umfassen und der Sensor ist vorteilhafterweise an der Lagerbuchse angebracht. Ferner kann das Fanglager eine Haltevorrichtung zur Befestigung an einem Boden des Abwasserbeckens umfassen und die Lagerbuchse ist zweckmäßigerweise lösbar an der Haltevorrichtung befestigt. Die Lagerbuchse kann insbesondere relativ zur Haltevorrichtung verschiebbar sein, so dass sie sich auch nach Befestigung der Haltevorrichtung am Boden des Abwasserbeckens bezüglich der Antriebswelle justieren lässt.

Bei dem Sensor handelt es sich um einen Magnetfeldsensor oder eine Induktionsspule. Vorteilhafterweise wird ein Magnetfeldsensor, insbesondere ein Reed-Schalter oder ein Hallsensor, verwendet. Die Verwendung eines Magnetfeldsensors ermöglicht eine besonders einfache Ausgestaltung der Auswerteeinrichtung.

In der Gleithülse ist zumindest ein mittels des Sensors detektierbares Detektionselement, nämlich ein Permanentmagnet, aufgenommen. Vorteilhafterweise sind in der Gleithülse in über deren Umfang verteilter Anordnung mehrere Detektionselemente aufgenommen. Die Detektionselemente sind zweckmäßigerweise gleichmäßig über den Umfang verteilt. Die mehreren Detektionselemente sind nach einer besonders vorteilhaften Ausgestaltung in der Gleithülse in voneinander verschiedenen Tiefen bezüglich eines Außenumfangs der Gleithülse vorgesehen.

Wenn die Gleithülse neu ist, sind sämtliche Detektionselemente vorhanden. Vom Sensor wird bei einer vorgegebenen Betriebsdrehzahl der Antriebswelle eine erste Impulsfrequenz erfasst, welche den unverschlissenen Zustand der Gleithülse anzeigt. Mit zunehmendem Verschleiß der Gleithülse brechen nacheinander die in verschiedenen Tiefen bezüglich des Außenumfangs der Gleithülse vorgesehenen Detektionselemente aus. Der Verlust jedes Detektionselements bewirkt eine Änderung der mittels des Sensors erfassten Impulsfrequenz. Mittels der Auswerteeinrichtung kann daraus ein dem Verschleißzustand entsprechendes Anzeigesignal zur Anzeige mittels der Anzeigeeinrichtung und/oder ein Notabschaltsignal zum automatischen Abschalten der Antriebseinrichtung erzeugt werden.

Unter Verwendung eines Dehnungs- oder Schwingungssensors ist es möglich, aus einem Schwingungszustand auf den Verschleißzustand der Gleithülse zu schließen. In der Gleithülse kann auch ein weiterer Schaltkontakt vorgesehen sein, welcher elektrisch leitend mit der vorzugsweise aus Metall hergestellten Rührwelle verbunden ist. Wenn der weitere Schaltkontakt in Kontakt mit dem an der Lagerbuchse vorgesehenen Schaltkontakt kommt, wird ein Stromkreis geschlossen, der einen bestimmten Verschleißzustand anzeigt.

Nach einer weiteren Ausgestaltung ist der Rührkörper hyperboloidartig ausgestaltet. Ein solcher Rührkörper ist beispielsweise aus der WO 2011/083063 A1 bekannt.

Nachfolgend werden Ausführungsbeispiele anhand der Zeichnungen näher erläutert. Es zeigen:
- Fig. 1: eine schematische Seitenansicht einer Rührvorrichtung,
- Fig. 2: eine perspektivische Ansicht eines Fanglagers,
- Fig. 3: eine Schnittansicht gemäß Fig. 2,
- Fig. 4: eine Detailansicht des Bereichs A in Fig. 3,
- Fig. 5: eine schematische Schnittansicht einer ersten Erfassungseinrichtung,
- Fig. 6: eine erste Impulsfolge über dem Drehwinkel,
- Fig. 7: eine zweite Impulsfolge über dem Drehwinkel,
- Fig. 8: eine dritte Impulsfolge über dem Drehwinkel,
- Fig. 9: eine Auswerteeinrichtung,
- Fig. 10: eine Schaltung zum automatischen Abschalten,
- Fig. 11: eine schematische Schnittansicht einer zweiten Erfassungseinrichtung,
- Fig. 12: einen ersten Dehnungsverlauf der Lagerbuchse über dem Drehwinkel,
- Fig. 13: einen zweiten Dehnungsverlauf der Lagerbuchse über dem Drehwinkel und
- Fig. 14: eine schematische Schnittansicht einer dritten Erfassungseinrichtung.

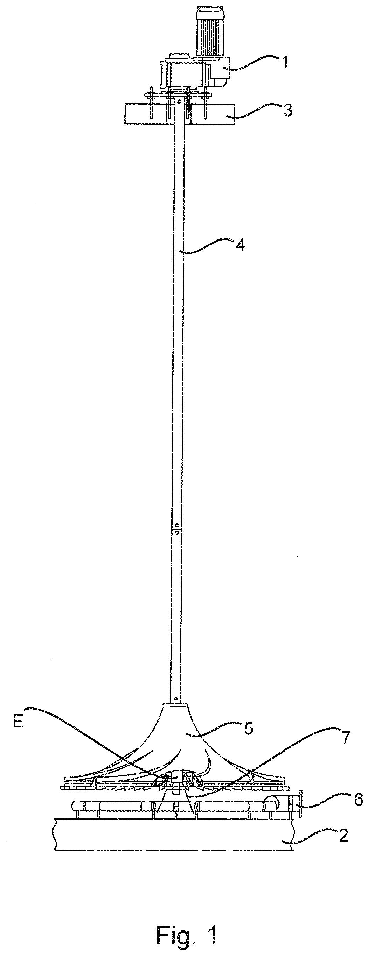

Bei der in Fig. 1 gezeigten Rührvorrichtung ist eine Antriebseinrichtung 1 oberhalb eines Beckenbodens 2, z. B. an einer ein Abwasserbecken (hier nicht gezeigt) überspannenden Brücke 3, befestigt. Der Beckenboden 2 verläuft in horizontaler Richtung. Von der Antriebseinrichtung 1 erstreckt sich im gezeigten Montagezustand in vertikaler Richtung eine Antriebswelle 4, an der ein Hyperboloidrührkörper 5 angebracht ist. Ein sich von einer Unterseite des Hyperboloidrührkörpers 5 erstreckendes freies Ende der Antriebswelle 4 ist mit dem Bezugszeichen E bezeichnet. Zwischen dem Beckenboden 2 und dem Hyperboloidrührkörper 5 ist eine Ringleitung 6 zum Zuführen von Luft in einen Bereich unterhalb des Hyperboloidrührkörpers 5 vorgesehen. Mit dem Bezugszeichen 7 ist allgemein ein auf dem Beckenboden 2 montiertes Fanglager bezeichnet, in welchem das freie Ende E der Antriebswelle 4 drehbar gehalten ist.

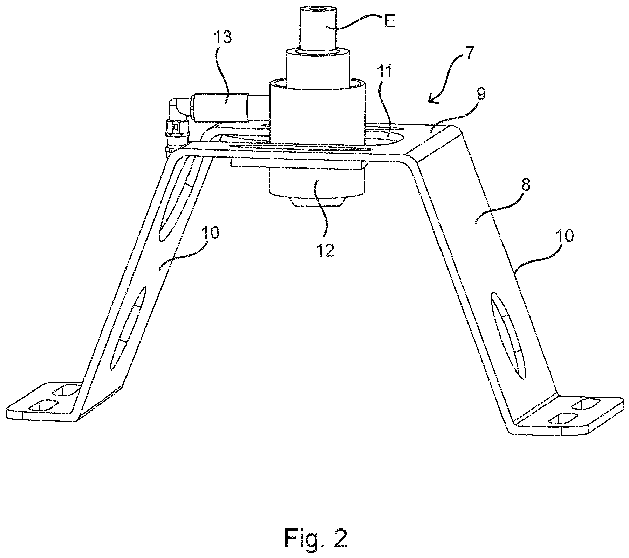

Die Fig. 2 bis 4 zeigen ein Ausführungsbeispiel eines Fanglagers 7. Es umfasst eine Haltevorrichtung 8, welche aus einem trapezartig geformten Blech gebildet ist. Ein erhabener Abschnitt 9 der Haltevorrichtung 8 ist über zwei sich davon erstreckende Schenkel 10 gegen den (hier nicht gezeigten) Beckenboden 2 abgestützt. Im erhabenen Abschnitt 9 ist eine Ausnehmung 11 vorgesehen, in welcher eine Lagerbuchse 12 befestigt ist. In der Lagerbuchse 12 ist drehbar das freie Ende E der (hier nicht weiter gezeigten) Antriebswelle 4 gehalten. Mit dem Bezugszeichen 13 ist ein an der Lagerbuchse 12 angebrachter Sensor bezeichnet. Am freien Ende E der Antriebswelle 4 ist eine Gleitbuchse bzw. Gleithülse 14 vorgesehen, die aus einem Kunststoff oder Metall hergestellt sein kann. Das die Gleithülse 14 bildende Material weist vorteilhafterweise eine geringere Härte auf als ein die Lagerbuchse 12 bildendes weiteres Material. Die Lagerbuchse 12 ist üblicherweise aus Metall, insbesondere Stahl, hergestellt. Die Gleithülse 14 ist mittels einer am freien Ende E der Antriebswelle 4 angebrachten Schraube 15 oder dgl. befestigt. Eine verschlissene Gleithülse 14 kann durch Lösen der Schraube 15 vom freien Ende E der Antriebswelle 4 entfernt und gegen eine neue Gleithülse 14 ersetzt werden. Die Gleithülse 14 ist vorzugsweise aus einem elektrisch nicht leitenden oder einem nicht magnetischen Material, vorzugsweise aus einem Kunststoff wie z. B. PBT, PTFE, PA 6 G, PA 6, PA 66, PA 12 G, PET, PEEK, POM oder dgl., hergestellt.

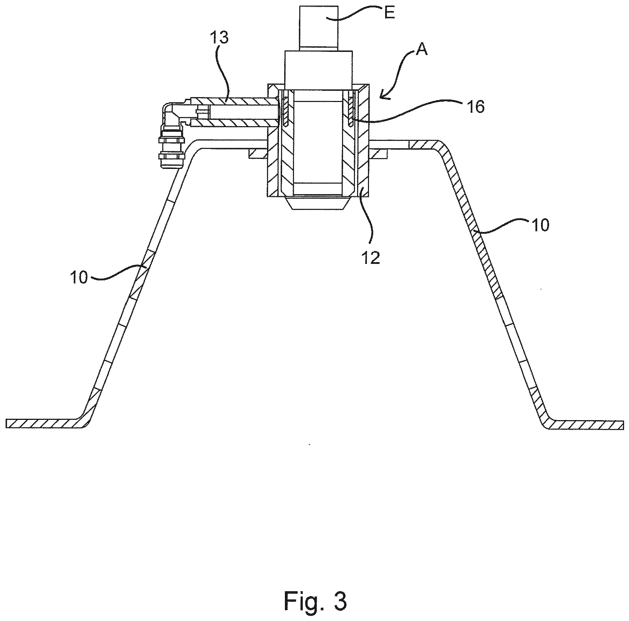

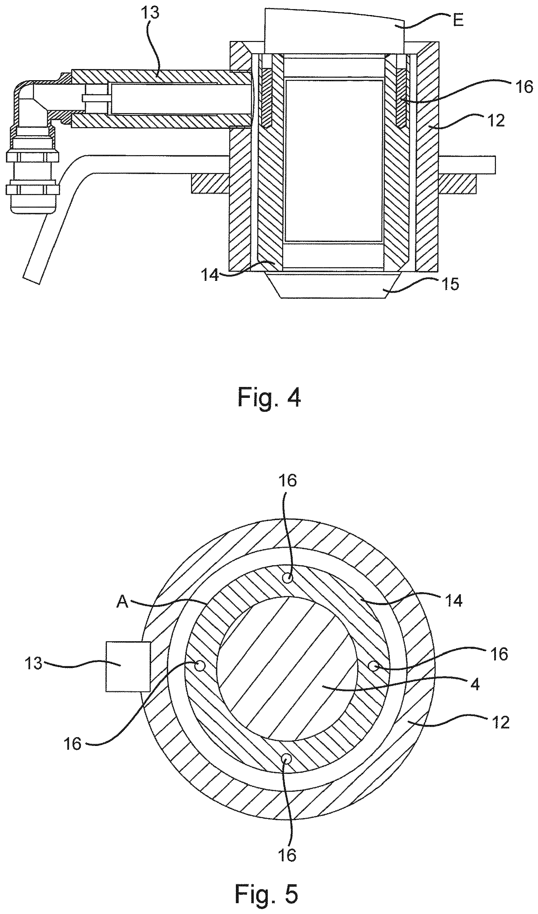

In der in den Fig. 3 und 4 gezeigten Gleithülse 14 sind Detektionselemente aufgenommen, welche mit dem Sensor 13 erfassbar sind, wenn sie in dessen Nähe vorbeigeführt werden. Bei den Detektionselementen handelt es sich um Permanentmagnete. In diesem Fall ist die Gleithülse 14 z. B. aus einem Kunststoff hergestellt. Die Permanentmagnete 16 können in den Kunststoff eingegossen sein.

Die Fig. 5 zeigt eine schematische Schnittansicht durch eine erste Erfassungseinrichtung. In der Gleithülse 14 sind gleichmäßig über deren Umfang verteilt vier Permanentmagnete 16 aufgenommen. Die Permanentmagnete 16 sind bezüglich eines Außenumfangs A in verschiedenen Tiefen in der Gleithülse 14 angeordnet. Im vorliegenden Ausführungsbeispiel wird als Sensor 13 ein Magnetfeldsensor, insbesondere ein Hall-Sensor, verwendet.

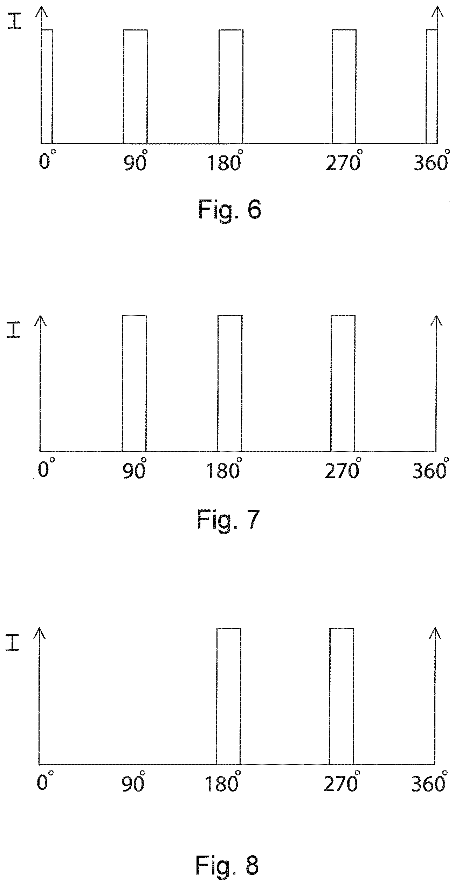

Fig. 6 zeigt eine erste Impulsfolge, welche mittels des Sensors 13 erfasst wird, wenn sämtliche Permanentmagnete 16 in der Gleithülse 14 enthalten sind. Es ergeben sich pro Umdrehung der Antriebswelle 4 vier Impulse.

Fig. 7 zeigt eine zweite Impulsfolge. Dabei ist infolge von Verschleiß der Gleithülse 14 bereits derjenige Permanentmagnet 16 ausgebrochen, welcher am nächsten des Außenumfangs A angebracht gewesen ist. Es ergeben sich in diesem Fall nur noch drei Impulse pro Umdrehung der Antriebswelle 4.

Bei der in Fig. 8 gezeigten dritten Impulsfolge sind infolge zunehmenden Verschleißes bereits zwei Permanentmagnete 16 aus der Gleithülse 14 ausgebrochen. Pro Umdrehung werden in diesem Fall vom Sensor 13 nur noch zwei Impulse erzeugt.

In Abhängigkeit der Impulszahl pro Zeiteinheit bzw. einer Impulsfrequenz ist es möglich, mittels einer Anzeigeeinrichtung einen Verschleißzustand der Gleithülse 14 außerhalb des Abwasserbeckens anzuzeigen. Ferner kann in Abhängigkeit der Impulsfrequenz die Antriebseinrichtung 1 automatisch abgeschaltet werden, um einen Schaden am freien Ende E der Antriebswelle 4 und/oder an der Lagerbuchse 12 zu vermeiden.

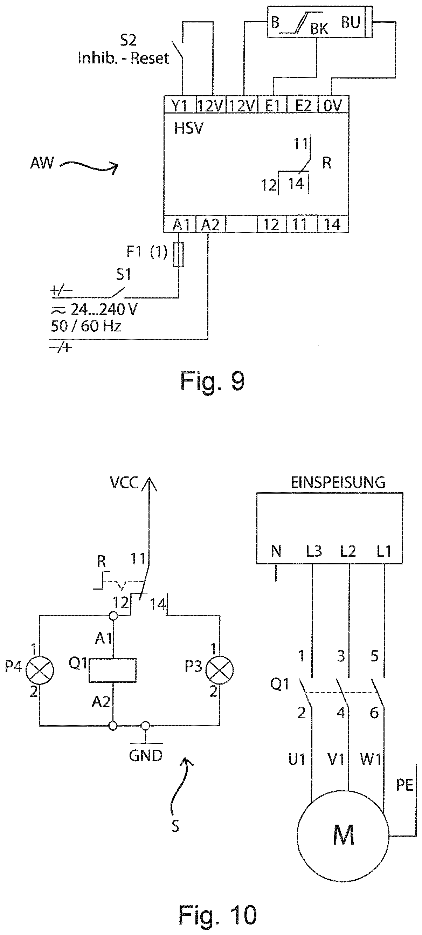

Die Fig. 9 und 10 zeigen Ausführungsbeispiele einer Auswerteeinrichtung AW sowie einer Schaltung S zum automatischen Abschalten der Antriebseinrichtung. Bei der in Fig. 9 gezeigten Auswerteeinrichtung AW wird z. B. ein Hall-Sensor über die Klemmen 0V und 12V mit einer Messspannung versorgt. Ein Sensorsignal wird über die Klemme E1 erfasst. Die Auswerteeinrichtung AW wird über die Anschlüsse A1 und A2 mit einer Netzspannung versorgt, welche durch einen ersten Schalter S1 unterbrochen werden kann. Mit einem zweiten Schalter S2 ist es möglich, ein Relais R zurückzusetzen. Eine Schaltposition des Relais R wird mittels der Auswerteeinrichtung AW in Abhängigkeit der Impulsfrequenz gewählt.

Fig. 10 zeigt eine Schaltung S zum automatischen Abschalten eines Motors M der Antriebseinrichtung 1 (hier nicht gezeigt). Mit dem Bezugszeichen Q1 ist ein Schütz bezeichnet, welcher beim Schalten des Relais R von der Schaltposition 11/12 in die Schaltposition 11/14 geöffnet wird. Mit dem Bezugszeichen P3 und P4 sind Anzeigelampen bezeichnet, welche den Schaltzustand des Schützes Q1 anzeigen. Statt oder zusätzlich zu der Anzeigelampe P3 kann beispielsweise auch ein akustisches Signalmittel vorgesehen sein, mit dem das automatische Abschalten der Antriebseinrichtung anzeigt werden kann.

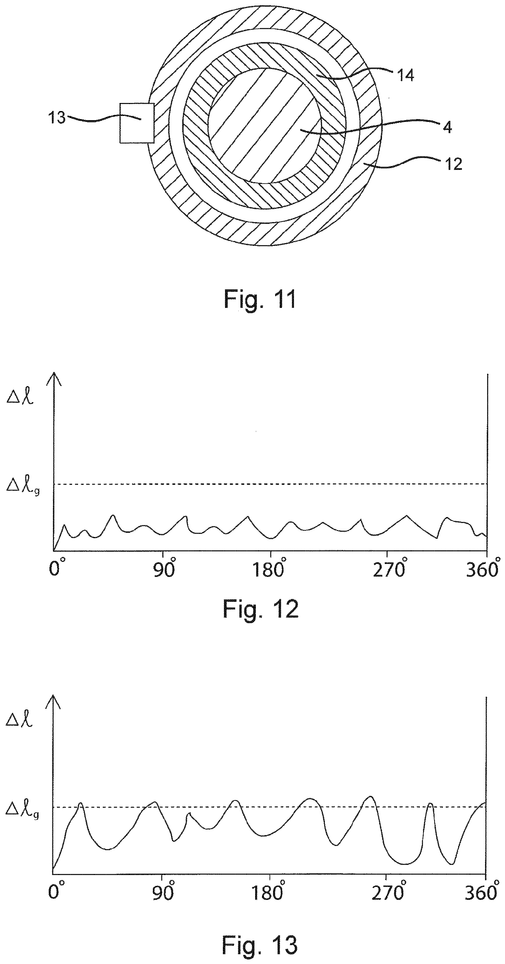

Fig. 11 zeigt eine schematische Querschnittsansicht durch eine zweite Erfassungseinrichtung. Dabei ist der Sensor 13 ein Dehnungs- oder Biegesensor. Es kann sich beispielsweise um einen Dehnungsmessstreifen, einen piezoelektrischen Biegesensor oder dgl. handeln. Mit einem solchen Sensor 13 können in Abhängigkeit des Drehwinkels der Antriebswelle 4 Formänderungen oder Schwingungen der Lagerbuchse 12 erfasst werden. Mit zunehmendem Verschleiß der Gleithülse 14 nehmen bei der Rotation der Antriebswelle 4 die Formänderungen oder Schwingungen in der Lagerbuchse 12 zu.

Fig. 12 zeigt eine Formänderung Δ*l* über dem Drehwinkel, wenn die Gleithülse 14 nicht oder kaum verschlissen ist.

Fig. 13 zeigt die Formänderung Δ*l* der Lagerbuchse 12 über dem Drehwinkel, wenn die Gleithülse 14 verschlissen ist. In diesem Fall sind die Amplituden der Formänderung Δ*l* größer als ein vorgegebener Grenzwert Δ*l*_{g}. Wenn die Amplituden der Formänderung Δ*l* den Grenzwert Δ*l*_{g} übersteigen, kann das zur Erzeugung eines Abschaltsignals zum Abschalten der Antriebseinrichtung 1 benutzt werden.

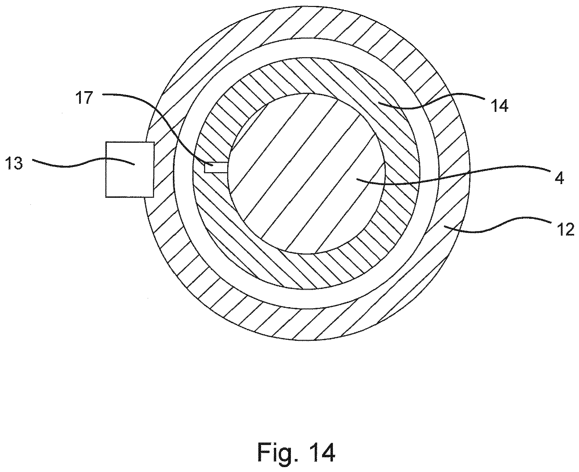

Fig. 14 zeigt eine schematische Schnittansicht durch eine dritte Erfassungseinrichtung. Die Gleithülse 14 ist in diesem Fall mit einem Kontaktstift 17 versehen, welcher elektrisch leitend mit der aus Metall hergestellten Antriebswelle 4 verbunden ist. Die Gleithülse 14 ist in diesem Fall beispielsweise aus einem Kunststoff hergestellt. Als Sensor 13 dient hier ein einfacher elektrischer Kontakt, welcher mit der ebenfalls aus Metall hergestellten Lagerbuchse 12 verbunden ist. Über eine einfache Widerstandsmessung kann ein Zustand erkannt werden, bei dem der Kontaktstift 17 in Kontakt mit der Lagerbuchse 12 ist. Ein solches Signal kann ebenfalls zum Abschalten der Antriebseinrichtung 1 benutzt werden.

### Bezugszeichenliste

- 1: Antriebseinrichtung
- 2: Beckenboden
- 3: Brücke
- 4: Antriebswelle
- 5: Rührkörper
- 6: Ringleitung
- 7: Fanglager
- 8: Haltevorrichtung
- 9: erhabener Abschnitt
- 10: Schenkel
- 11: Ausnehmung
- 12: Lagerbuchse
- 13: Sensor
- 14: Gleithülse
- 15: Schraube
- 16: Permanentmagnet
- 17: Kontaktstift

- A: Außenumfang
- AW: Auswerteeinrichtung
- A1, A2: Anschluss
- E: freies Ende
- M: Motor
- P3, P4: Anzeigelampe
- Q1: Schütz
- R: Relais
- S: Schaltung
- S1: erster Schalter
- S2: zweiter Schalter

## Patentansprüche

1. Rührvorrichtung für Abwasser, umfassend
eine Antriebseinrichtung (1) mit einer im Montagezustand sich vertikal davon erstreckenden Antriebswelle (4),
einen an der Antriebswelle (4) angebrachten Rührkörper (5), und
ein Fanglager (7), in welchem ein freies Ende (E) der Antriebswelle (4) drehbar gehalten ist,
**dadurch gekennzeichnet, dass**
am freien Ende (E) der Antriebswelle (4) eine Gleithülse (14) angebracht ist, und dass eine Einrichtung (13, 16, 17) zur Erfassung eines Verschleißzustands der Gleithülse (14) vorgesehen ist,
wobei die Einrichtung (13, 16, 17) zur Erfassung des Verschleißzustands einen am Fanglager (7) angebrachten Sensor (13), nämlich einen Magnetfeldsensor oder eine Induktionsspule, und eine Auswerteeinrichtung (AW) zur Auswertung der vom Sensor (13) gelieferten Signale umfasst, und
wobei in der Gleithülse (14) zumindest ein mittels des Sensors (13) detektierbarer Permanentmagnet (16) aufgenommen ist.

2. Rührvorrichtung nach Anspruch 1, wobei die Auswerteeinrichtung (AW) eine Schaltung (S) umfasst, welche bei Erfassung eines vorgegebenen Verschleißzustands automatisch die Antriebseinrichtung (1) abschaltet.

3. Rührvorrichtung nach einem der vorhergehenden Ansprüche, wobei die Einrichtung (13, 16, 17) zur Erfassung des Verschleißzustands eine Anzeigeeinrichtung (P3, P4) zum Anzeigen eines von der Auswerteeinrichtung (AW) ermittelten Betriebszustands umfasst.

4. Rührvorrichtung nach Anspruch 3, wobei der Betriebszustand der Verschleißzustand der Gleithülse (14) oder ein Notabschaltzustand ist.

5. Rührvorrichtung nach einem der vorhergehenden Ansprüche, wobei das Fanglager (7) eine die Gleithülse (14) umgreifende Lagerbuchse (12) umfasst und der Sensor (13) an der Lagerbuchse (12) angebracht ist.

6. Rührvorrichtung nach Anspruch 5, wobei das Fanglager (7) eine Haltevorrichtung (8) zur Befestigung an einem Boden (2) eines Abwasserbeckens umfasst und die Lagerbuchse (12) an der Haltevorrichtung (8) lösbar befestigt ist.

7. Rührvorrichtung nach einem der vorhergehenden Ansprüche, wobei der Magnetfeldsensor ein Reed-Schalter oder ein Hall-Sensor ist.

8. Rührvorrichtung nach einem der vorhergehenden Ansprüche, wobei in der Gleithülse (14) in über deren Umfang verteilter Anordnung mehrere Permanentmagnete (16) aufgenommen sind.

9. Rührvorrichtung nach Anspruch 8, wobei die Permanentmagnete (16) gleichmäßig über den Umfang verteilt sind.

10. Rührvorrichtung nach einem der Ansprüche 8 oder 9, wobei die mehreren Permanentmagnete (16) in der Gleithülse (14) in voneinander verschiedenen Tiefen bezüglich eines Außenumfangs (A) der Gleithülse (14) vorgesehen sind.

11. Rührvorrichtung nach einem der vorhergehenden Ansprüche, wobei der Rührkörper (5) hyperboloidartig gestaltet ist.

## Claims

1. A stirring device for wastewater, comprising
a drive device (1) having a drive shaft (4) extending vertically therefrom in the assembled state,
a stirring body (5) mounted on the drive shaft (4), and
a safety bearing (7), in which a free end (E) of the drive shaft (4) is rotatably held, **characterised in that**
a slide sleeve (14) is mounted on the free end (E) of the drive shaft (4), and **in that** a device (13, 16, 17) for detecting a state of wear of the slide sleeve (14) is provided,
wherein the device (13, 16, 17) for detecting the state of wear comprises a sensor (13), specifically a magnetic field sensor or an induction coil, mounted on the safety bearing (7) and an evaluation device (AW) for evaluating the signals delivered by the sensor (13), and
wherein at least one permanent magnet (16) detectable by means of the sensor (13) is accommodated in the slide sleeve (14).

2. The stirring device according to Claim 1, wherein the evaluation device (AW) comprises a circuit (S), which automatically switches off the drive device (1) upon detection of a predefined state of wear.

3. The stirring device according to any one of the preceding claims, wherein the device (13, 16, 17) for detecting the state of wear comprises a display device (P3, P4) for displaying an operating state determined by the evaluation device (AW).

4. The stirring device according to Claim 3, wherein the operating state is the state of wear of the slide sleeve (14) or an emergency stop state.

5. The stirring device according to any one of the preceding claims, wherein the safety bearing (7) comprises a bearing bush (12) surrounding the slide sleeve (14) and the sensor (13) is mounted on the bearing bush (12).

6. The stirring device according to Claim 5, wherein the safety bearing (7) comprises a holding device (8) for securing to a base (2) of a wastewater tank and the bearing bush (12) is secured to the holding device (8) detachably.

7. The stirring device according to any one of the preceding claims, wherein the magnetic field sensor is a Reed switch or a Hall sensor.

8. The stirring device according to any one of the preceding claims, wherein a plurality of permanent magnets (16) are accommodated in the slide sleeve (14) in a device distributed over the periphery of said slide sleeve.

9. The stirring device according to Claim 8, wherein the permanent magnets (16) are distributed uniformly over the periphery.

10. The stirring device according to either one of Claims 8 or 9, wherein the plurality of permanent magnets are provided in the slide sleeve (14) at different depths from one another with respect to an outer periphery (A) of the slide sleeve (14).

11. The stirring device according to any one of the preceding claims, wherein the stirring body (5) is formed in a hyperboloid-like manner.

## Revendications

1. Dispositif d'agitation d'eaux usées, comprenant
un dispositif d'entraînement (1) comportant un arbre d'entraînement (4) s'étendant perpen-diculairement à celui-ci une fois monté,
un élément d'agitation (5) monté sur l'arbre d'entraînement (4), et
un palier de retenue (7) dans lequel une extrémité libre (E) de l'arbre d'entraînement (4) est supportée à rotation,
**caractérisé**
**en ce qu'**un manchon coulissant (14) est fixé à l'extrémité libre (E) de l'arbre d'entraînement (4) et qu'un moyen (13, 16, 17) est prévu pour détecter un état d'usure du manchon coulissant (14),
**en ce que** le moyen (13, 16, 17) de détection de l'état d'usure comporte un capteur (13) fixé au palier de retenue (7), à savoir un capteur de champ magnétique ou une bobine d'inductance, et un dispositif d'analyse (AW) servant à analyser les signaux fournis par le capteur (13), et
**en ce qu'**au moins un aimant permanent (16) qui peut être détecté au moyen du capteur (13) est logé dans le manchon coulissant (14).

2. Dispositif d'agitation selon la revendication 1, en ce que le dispositif d'analyse (AW) comporte un circuit (S) qui déconnecte automatiquement le dispositif d'entraînement (1) à détection d'un état d'usure prédéfini.

3. Dispositif d'agitation selon l'une des revendications précédentes, en ce que le moyen (13, 16, 17) de détection de l'état d'usure comporte un dispositif de visualisation (P3, P4) pour afficher un état opérationnel déterminé par le dispositif d'analyse (AW).

4. Dispositif d'agitation selon la revendication 3, en ce que l'état opérationnel est l'état d'usure du manchon coulissant (14) ou un état d'arrêt d'urgence.

5. Dispositif d'agitation selon l'une des revendications précédentes, en ce que le palier de retenue (7) comporte un coussinet (12) enveloppant le manchon coulissant (14) et le capteur (13) est fixé au coussinet (12).

6. Dispositif d'agitation selon la revendication 5, en ce que le palier de retenue (7) com-porte un dispositif de retenue (8) pour la fixation sur un fond (2) d'un bassin d'eaux usées et le coussinet (12) est fixé de manière amovible au dispositif de retenue (8).

7. Dispositif d'agitation selon l'une des revendications précédentes, en ce que le cap-teur de champ magnétique est un interrupteur Reed ou un capteur à effet Hall.

8. Dispositif d'agitation selon l'une des revendications précédentes, en ce que plusieurs aimants permanents (16) sont logés dans le manchon coulissant (14) selon une disposition répartie sur sa circonférence.

9. Dispositif d'agitation selon la revendication 8, en ce que les aimants permanents (16) sont répartis uniformément sur la circonférence.

10. Dispositif d'agitation selon l'une des revendications 8 ou 9, en ce que les divers ai-mants permanents (16) dans le manchon coulissant (14) sont prévus dans des profon-deurs mutuellement différentes par rapport à une circonférence extérieure (A) du man-chon coulissant (14).

11. Dispositif d'agitation selon l'une des revendications précédentes, en ce que l'élément d'agitation (5) est de conception hyperboloïde.
